**Europäisches Patentamt**

**European Patent Office**

**Office européen des brevets**

(11) Veröffentlichungsnummer: **0 162 374**
**B1**

(12) **EUROPÄISCHE PATENTSCHRIFT**

(45) Veröffentlichungstag der Patentschrift:
**06.09.89**

(51) Int. Cl.⁴: **H 02 M 3/335**

(21) Anmeldenummer: **85105652.3**

(22) Anmeldetag: **08.05.85**

(54) Schaltungsanordnung für Umrichter.

(30) Priorität: **10.05.84 DE 3417356**

(43) Veröffentlichungstag der Anmeldung:
**27.11.85 Patentblatt 85/48**

(45) Bekanntmachung des Hinweises auf die Patenterteilung:
**06.09.89 Patentblatt 89/36**

(84) Benannte Vertragsstaaten:
**AT DE FR GB IT NL**

(56) Entgegenhaltungen:
**DE-A- 1 921 357**
**DE-A- 2 649 087**
**DE-A- 2 738 838**
**DE-A- 2 819 676**

(73) Patentinhaber: **Siemens Aktiengesellschaft,**
**Wittelsbacherplatz 2, D-8000 München 2 (DE)**

(72) Erfinder: **Brakus, Bogdan, Dipl.-Ing., Ihleweg 4,**
**D-8039 Puchheim (DE)**

## Beschreibung

Die Erfindung betrifft eine Schaltungsanordnung für Umrichter mit einer Regeleinrichtung zur Ausregelung von Eingangs- und/oder Ausgangsspannungsabweichungen durch Beeinflussung der Übertragungscharakteristik des Umrichters, z.B. durch Änderung des Impuls-Pausenverhältnisses (Tastgrad) eines in einem Längszweig des Umrichters angeordneten vorzugsweise elektronischen Lastschalters, wobei wenigstens zwei Umrichter vorgesehen sind, die ausgangsseitig auf eine gemeinsame Last arbeiten und eingangsseitig in Reihe geschaltet sind.

Stromversorgungsgeräte mit Umrichtern sind allgemein bekannt. Eine diesbezügliche Schaltungsanordnung ist zum Beispiel der deutschen Offenlegungsschrift 2 819 676 zu entnehmen. Besondere Verbreitung in diesem Zusammenhang haben sogenannte Schaltnetzteile gefunden, bei denen eine Eingangsgleichspannung, (üblicherweise eine gleichgerichtete Netzspannung), mit vergleichsweise hoher Frequenz mittels eines vorzugsweise als Halbleiterelement ausgebildeten Lastschalters periodisch an eine Induktivität angeschaltet wird, die ihrerseits während der Sperrphasen des Lastschalters den Verbraucher speist. Man unterscheidet zwei Grundtypen, nämlich Sperr- und Durchflußumrichter, die sich im wesentlichen dadurch unterscheiden, daß die Induktivität im Quer- bzw. im Längszweig der Schaltung angeordnet ist. Im ersten Fall (Sperrumrichter) wird der Lastwiderstand ausschließlich vom Entladestrom der Induktivität gespeist, wobei die Strompausen aus einem dem Lastwiderstand parallel geschalteten Kondensator überbrückt werden. Im zweiten Fall (Durchflußumrichter) wird der Lastwiderstand während der Einschaltphase des Lastschalters vom Aufladestrom der Induktivität durchflossen und während der Ausschaltphase des Lastschalters über eine sogenannte Freilaufdiode vom Entladestrom der Induktivität weitergespeist. Umrichterschaltungen enthalten im allgemeinen einen Transformator zur galvanischen Trennung von Eingangs- oder Ausgangskreis.

Für Durchflußumrichter ist durch die oben genannte Offenlegungsschrift eine kreuzweise Verschaltung der Magnetisierungswicklung bekannt. – Beim Sperrumrichter kann der erwähnte Trenntransformator gleichzeitig die Speicherinduktivität bilden.

Die Ausgangsspannung eines Umrichters hängt außer vom Übersetzungsverhältnis eines eventuellen Trenntransformators vom sogenannten Tastgrad, d.h. dem Impuls-Pausenverhältnis ab, mit dem der Lastschalter ein- und ausgeschaltet wird. Durch Änderung des Tastgrades kann daher die Ausgangsspannung auf einen vorbestimmten Wert geregelt werden. Es ist üblich, den Lastschalter mit einer konstanten Frequenz zu betreiben und die erwähnte Regelung der Ausgangsspannung durch Pulsbreitenmodulation der Schaltimpulse des Lastschalters herbeizuführen. Es ist in diesem Zusammenhang auch bekannt (DE-OS 25 30 631), den Bereich, innerhalb dessen eine Pulsbreitenmodulation möglich ist, in Abhängigkeit von der Eingangsgleichspannung zu begrenzen, um damit eine Überlastung der beteiligten Bauelemente auszuschließen.

Sperrumrichter werden im allgemeinen für vergleichsweise niedrige Leistungen eingesetzt, während Durchflußumrichter sich zum Aufbau von Schaltnetzteilen mittlerer und größerer Leistungen eignen. Es ist bekannt, Schaltnetzteile hoher Leistung dadurch zu realisieren, daß zwei Durchflußumrichter mit ihren Eingängen und Ausgängen parallel geschaltet werden. Diese als «pushpush-converter» bezeichnete Anordnung ist im wesentlichen dadurch gekennzeichnet, daß die beiden Lastschalter zeitlich versetzt geschaltet werden, so daß die Welligkeit des Ausgangsstromes die doppelte Frequenz hat wie beim normalen (Eintakt)-Durchflußumrichter.

Die Leistung, die von mit Umrichtern aufgebauten Schaltnetzteilen übertragbar ist, ist begrenzt durch die Belastbarkeit der verfügbaren Lastschalter, die im allgemeinen von Transistoren gebildet sind. Die durch die Strombelastbarkeit dieser Schaltelemente gegebene Grenze kann dadurch überwunden werden, daß zwei (oder mehr) Umrichter in der erwähnten Weise parallel angeordnet werden. Eine andere Begrenzung der übertragbaren Leistung bildet das speisende Netz. Herkömmliche Schaltnetzteile werden aus einer (gleichgerichteten) 220 V-Einphasen-Wechselspannung gespeist. Die derzeit verfügbaren als Lastschalter verwendbaren Schalttransistoren eignen sich für diese Spannung und für Strombelastungen, die einer Netzteilleistung von bis zu 2 kV entsprechen. Höhere Leistungen verursachen unzumutbare Beeinträchtigungen des speisenden Netzes: Infolge der unvermeidlich großen Eingangskapazität entsteht ein sehr hoher Stromklirrfaktor; es tritt außerdem ein sehr starker Einschaltstromstoß auf; schließlich wird der Nulleiter bei einphasigem Netzanschluß sehr stark belastet.

Diese Nachteile lassen es geboten erscheinen, Schaltnetzteile sehr hoher Leistung über das Drehstromnetz zu speisen. Anschluß z.B. an ein 380 V-Netz bedeutet allerdings eine entsprechend höhere gleichgerichtete Eingangsspannung für den Umrichter. Falls drehstromgespeiste Schaltnetzteile nach dem bewährten Durchflußumrichterprinzip aufgebaut werden, müßten als Lastschalter Transistoren mit einer maximalen Kollektor-Emitter-Spannung von etwa 1600 V eingesetzt werden. Solche Bauelemente mit entsprechenden Stromstärken und Schaltgeschwindigkeiten stehen derzeit nicht zur Verfügung.

Der Erfindung liegt die Aufgabe zugrunde, eine Schaltungsanordnung für Umrichter zu schaffen, die die Verwendung von Lastschaltern ermöglicht, deren Spannungsbelastbarkeit kleiner ist als die Spitzenspannungen, die beim Betrieb an einem gegebenen Speisenetz insgesamt auftreten können, so daß entweder bei Verwendung von Schalttransistoren mit größter derzeit verfügbarer Spannungsbelastbarkeit die speisende Eingangsspannung vergrößert werden kann (und damit z.B. der Betrieb an einem Drehstromnetz möglich ist), oder an einem Netz mit niedrigerer Spannung Schalttransistoren verwendet werden können, die eine niedrigere als die derzeit verfügbare höchstmögliche Spannungsfestigkeit besitzen und z.B. höhere Strombelastbarkeit haben.

Diese Aufgabe wird durch eine Schaltungsanordnung mit den Merkmalen des Patentanspruches 1 gelöst.

Das Merkmal des Patentanspruches 1, wonach zwei oder mehr Umrichter eingangsseitig in Reihe geschaltet sind, ist nur scheinbar naheliegend, da selbst bei größtmöglicher baulicher Symmetrie der beteiligten Umrichter eine gleichmäßige Aufteilung der Eingangsspannung auf die Eingänge der Umrichter ohne die weiteren kennzeichnenden Merkmale völlig ausgeschlossen ist. Erst die erfindungsgemäße Ausregelung von relativen Abweichungen der an den Eingängen der einzelnen Umrichter anliegenden Teilspannungen ermöglichen die erwähnte Reihenschaltung, die ihrerseits dazu führt, daß die einzelnen Bauelemente nur nach Maßgabe der vorgegebenen Teilspannungen belastet werden.

Eine bevorzugte Ausführungsform der Erfindung bedient sich zur Ausregelung von Abweichungen der einzelnen Teilspannungen der ohnehin vorhandenen Regeleinrichtungen für die Regelung der Ausgangsspannung. Dabei wird diese, z.B. mit Pulsbreitenmodulation arbeitende Regeleinrichtung unter den Steuereinfluß einer gemeinsamen Vergleichseinrichtung gestellt, mittels derer die Impulsbreite wenigstens eines der Umrichter nach Maßgabe von Abweichungen der relativen Eingangsteilspannung dieses Umrichters veränderbar ist.

Die Beeinflussung erfolgt bevorzugt in der Weise, daß eine Verringerung des Impuls-Pausenverhältnisses für den Lastschalter desjenigen Umrichters herbeigeführt wird, dessen Eingangsteilspannung einen vorgegebenen Grenzwert unterschreitet.

Wenn die Umrichter der Schaltungsanordnung Durchflußumrichter mit Trenntransformatoren sind, kann eine wirksame Ausregelung von relativen Schwankungen der Eingangsteilspannungen der einzelnen Umrichter auch dadurch herbeigeführt werden, daß die Entmagnetisierungswicklungen der Trenntransformatoren, über die die während der Schaltphase des zugehörigen Lastschalters von dem betreffenden Transformatorkern aufgenommenem Magnetisierungsenergie während der Sperrphase des Lastschalters zur Eingangsquelle zurückführbar ist, nicht mit dem Eingang des eigenen sondern mit dem Eingang eines anderen der beteiligten Umrichter verbunden ist, so daß die Magnetisierungsenergie eines Umrichters zu dem Eingang eines anderen Umrichters zurückgespeist wird.

Da die durch diese «kreuzweise» Rückspeisung der Magnetisierungsenergie bewirkte Symmetrierung der Schaltungsanordnung bereits sehr wirksam ist, kann für die oben erwähnte Beeinflussung der vorhandenen Regeleinrichtung ein relativ breites Toleranzband vorgegeben sein, so daß diese elektronische Regelung, z.B. durch zusätzliche Pulsbreitenmodulation, lediglich eine Begrenzungsfunktion ausübt, die erst dann wirksam wird, wenn die Symmetrierung durch die kreuzweise Rückspeisung der Magnetisierungsenergie für eine Symmetrierung nicht mehr ausreicht. Durch die Begrenzung des Einsatzes der elektronischen Regelung der Eingangsteilspannungen wird vermieden, daß diese bereits bei relativ kleinen Abweichungen wirksam wird. Dies ist deshalb von Bedeutung, weil die Ausgangsspannung der Umrichter durch das Eingreifen der elektronischen Regelung mit Geräuschspannungen überlagert wird, die störend sein können bzw. deren Beseitigung Aufwand erfordert.

Schaltungstechnische Einzelheiten zur Durchführung der «Zwangssymmetrierung» der Eingangsteilspannungen der einzelnen an der Schaltungsanordnung beteiligten Umrichter sind Gegenstand von Unteransprüchen, auf die hiermit zur Verkürzung der Beschreibung ausdrücklich verwiesen wird.

Im folgenden sei die Erfindung anhand der Zeichnungen näher erläutert:

Fig. 1 zeigt ein Prinzipschaltbild einer Schaltungsanordnung gemäß der Erfindung mit zwei Durchflußumrichtern, deren Ausgänge parallel und deren Eingänge in Reihe geschaltet sind,

Fig. 2 zeigt Einzelheiten der bei der Schaltungsanordnung gemäß Fig. 1 verwendeten Steuerschaltung zur elektronischen Symmetrierung der Eingangsteilspannungen beider Umrichter.

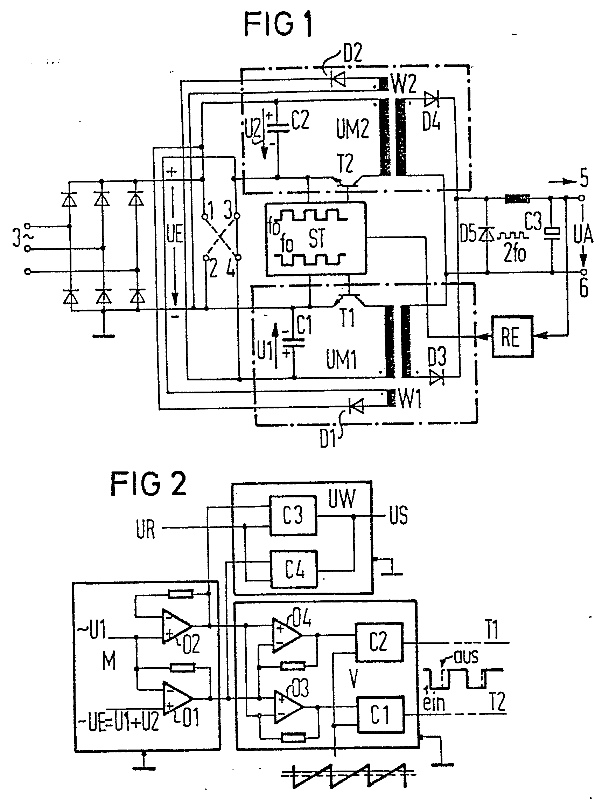

Die in Fig. 1 dargestellte Schaltungsanordnung besteht aus zwei gleichartigen Umrichtern UM1 und UM2. Jeder dieser Umrichter beinhaltet einen von einem Transistor T1 bzw. T2 gebildeten Lastschalter sowie einen Trenntransformator Tr1, Tr2. Der jeweilige Lastschalter T1 bzw. T2 ist im Primärkreis des zugehörigen Trenntransformators angeordnet. Die Sekundärwicklungen der Trenntransformatoren Tr1 bzw. Tr2 sind über Entkopplungsgleichrichter D3 bzw. D4 zueinander parallel geschaltet und arbeiten gemeinsam auf eine mit den Ausgangsklemmen 5 und 6 der Schaltungsanordnung verbindbare Last. In den zu diesen Ausgangsklemmen 5 und 6 führenden Ausgangskreis ist eine Speicherinduktivität L eingefügt. Ferner sind eine Freilaufdiode D5 sowie ein Speicherkondensator C3 in der dargestellten Weise in den Ausgangskreis geschaltet.

Die Trenntransformatoren Tr1 und Tr2 der beiden Umrichter UM1 bzw. UM2 besitzen Entmagnetisierungswicklungen W1 bzw. W2, die über Entkopplungsgleichrichter D1 bzw. D2 mit im Eingangskreis des jeweils anderen Umrichters vorgesehenen Kondensatoren C2 bzw. C1 verbunden sind.

Die Lastschalter T1 bzw. T2 werden durch eine gemeinsame Steuerschaltung ST periodisch mit der Frequenz fo angesteuert. Diese Ansteuerung erfolgt im Gegentakt, derart daß beide Lastschalter abwechselnd ein- und ausgeschaltet werden. Dieses von sogenannten Doppel-Durchflußumrichtern bekannte Prinzip hat zur Folge, daß im Ausgangskreis Stromimpulse mit der doppelten Frequenz $2f_o$ wirksam sind.

Die Ansteuerung der Lastschalter T1 und T2 durch die Steuerschaltung ST steht unter dem Einfluß einer Regeleinrichtung RE, mittels derer die an den Ausgangsklemmen 5 und 6 auftretende Ausgangsspannung überwacht wird. Die Einflußnahme der Regeleinrichtung auf die Steuerschaltung ST besteht vorzugsweise in einer Pulsbreitenmodulation der konstantfrequenten Ansteuerimpulse für die Lastschalter.

Die Steuerschaltung ST steht ferner unter dem Einfluß der an den Eingangskondensatoren C1 und C2 der beiden Umrichter auftretenden Eingangsteilspannungen U1 bzw. U2. Diese Einflußnahme wird weiter unten anhand von Fig. 2 näher erläutert.

Die zueinander in Reihe geschalteten Eingänge der beiden Umrichter UM1 und UM2 werden über die gemeinsamen Eingangsklemmen 1 und 2 von einer Eingangsgleichspannung UE gespeist, die durch Gleichrichtung aus einem Dreiphasennetz gewonnen wird.

Die in Fig. 2 dargestellte elektronische Regelungsschaltung, die – wie erwähnt – die Steuerschaltung ST in Abhängigkeit von den Eingangsteilspannungen U1 und U2 beeinflußt, besteht im wesentlichen aus einer Meßschaltung M, einer Unterspannungsüberwachung UW und einer Vergleicherschaltung V für die Pulsbreitenmodulation. Um die Übersichtlichkeit der Darstellung nicht zu beeinträchtigen, ist die Verbindung der Schaltung gemäß Fig. 2 mit der Schaltungsanordnung nach Fig. 1 in letzterer nicht dargestellt.

Die Meßschaltung M in Fig. 2 besteht im wesentlichen aus zwei Operationsverstärkern O1 und O2. Dem invertierenden Eingang des Operationsverstärkers O1 wird eine aus der Eingangsteilspannung U1 abgeleitete proportionale Teilspannung zugeführt. Dem nichtinvertierenden Eingang des Operationsverstärkers O1 wird eine aus der Summe U1 + U2 = UE der beiden Eingangsteilspannungen abgeleitete proportionale Meßspannung zugeführt, so daß am Ausgang von O1 die Differenz seiner beiden Eingangssignale, d.h. eine der Eingangsteilspannung U2 proportionale Meßspannung auftritt.

Der Operationsverstärker O2 der Meßschaltung M arbeitet als Impedanzwandler. Seinem nichtinvertierenden Eingang wird eine aus der Eingangsteilspannung U1 des Umrichters UM1 abgeleitete proportionale Meßspannung zugeführt, so daß eine entsprechende niederohmige Meßspannung an seinem Ausgang zur Verfügung steht. Die Ausgänge der Operationsverstärker O1 und O2 sind kreuzweise mit dem invertierenden bzw. dem nichtinvertierenden Eingang zweier Operationsverstärker O3 und O4 der Vergleicherschaltung V verbunden. In diesen werden die Differenzen zwischen den beiden Eingangsteilspannungen U1 und U2 bzw. den entsprechenden proportionalen Meßspannungen mit unterschiedlichem Vorzeichen verstärkt. Am Ausgang des Operationsverstärkers O3 erscheint also ein positives Ausgangssignal, wenn U2 größer ist als U1 und ein negatives Ausgangssignal, wenn U1 größer ist als U2. Das Ausgangssignal des Operationsverstärkers O4 verhält sich umgekehrt.

Die Ausgänge der Operationsverstärker O3 und O4 sind jeweils mit einem Eingang eines Komparators C1 bzw. C2 verbunden. Den anderen Eingängen dieser Komparatoren C1 und C2 wird gemeinsam eine zentrale Sägezahnspannung zugeführt. Am Ausgang der Komparatoren C1 bzw. C2 erscheinen daher Impulsfolgen, deren Tastgrad (Impuls-Pausenverhältnis) in Abhängigkeit von den Ausgangssignalen der Operationsverstärker O3 und O4, d.h. nach Maßgabe der Differenz zwischen den Eingangsteilspannungen U1 und U2, beeinflußt ist. Diese Impulsfolgen dienen zur Ansteuerung der Lastschalter T1 bzw. T2 in der Schaltung nach Fig. 1.

Die Ausgänge der Operationsverstärker O1 und O2 sind ferner mit der Schaltung UW zur Unterspannungsüberwachung verbunden. Sie werden dort in Komparatoren C3 bzw. C4 mit einer Referenzspannung UR verglichen. Falls die Eingangsteilspannung U1 oder U2 wenigstens eines der beiden Umrichter UM1 bzw. UM2 einen vorgegebenen Mindestwert unterschreitet, erscheint am Ausgang des entsprechenden Komparators C3 oder C4 ein Sperrsignal US, durch das die Schaltungsanordnung gesperrt wird. Die Unterspannungsüberwachung verhindert, daß die Umrichter UM1 und UM2 bei fehlender Eingangsspannung gefährdet werden oder daß einer der Umrichter überlastet wird, wenn der andere defekt ist.

Im folgenden sei die Funktion des in Fig. 1 und 2 dargestellten Ausführungsbeispieles der Erfindung kurz erläutert:

Es sei vorausgesetzt, daß die in Fig. 1 dargestellten Umrichter UM1 und UM2 identisch ausgebildet sind. Es sei ferner zunächst vorausgesetzt, daß die an ihren Eingangskondensatoren C1 und C2 auftretenden Teilspannungen U1 bzw. U2 gleich und jeweils halb so groß sind wie die Eingangsspannung UE, die durch Gleichrichtung aus dem Dreiphasennetz gewonnen wird. Wenn der Lastschalter T1 des Umrichters UM2 durch die Steuerschaltung ST in seinen leitenden Zustand gesteuert wird, fließt Strom aus der Eingangsquelle bzw. dem Kondensator C1 über die Primärwicklung des zugehörigen Trenntransformators Tr1. In der Sekundärwicklung dieses Trenntransformators wird ein Strom induziert, für den der Entkopplungsgleichrichter D3 durchlässig ist, so daß Stromfluß durch die Speicherinduktivität L und den an die Ausgangsklemmen 5 und 6 angeschlossenen Lastwiderstand stattfindet. Wenn der Lastschalter T1 wieder ausgeschaltet wird und bevor der im Gegentakt betriebene Lastschalter T2 des anderen Umrichters UM2 eingeschaltet wird, wird die an die Ausgangsklemmen 5 und 6 angeschaltete Last von der in der Speicherinduktivität L gespeicherten magnetischen Energie gespeist. Der betreffende Stromkreis verläuft über die Freilaufdiode D5. Sobald der Lastschalter T2 leitend wird, fließt Strom aus der Sekundärwicklung des Trenntransformators Tr2 über den Entkopplungsgleichrichter D4 und die Induktivität L zu der an die Ausgangsklemmen angeschlossenen Last. Die Freilaufdiode D5 wird wieder stromlos. Abweichungen der Ausgangsspannung UA von einem vorgegebenen Sollwert werden durch die Regeleinrichtung RE erfaßt und führen zu einer entsprechenden Beeinflussung des Impuls-Pausenverhältnisses in der Steuerschaltung ST.

Während der Sperrphase eines der Lastschalter T1 oder T2 wird die in dem zugehörigen Trenntransformator gespeicherte magnetische Energie über die Wicklung W1 bzw. W2 in den Eingangskondensator C2 bzw. C1 des jeweils anderen Umrichters zurückgespeist. Durch diese «kreuzweise» Rückspeisung erfolgt eine Symmetrierung des Betriebes, d.h. falls die Eingangsspannung eines der Umrichter, z.B. die Eingangsspannung U1 des Umrichters UM1 aus irgendeinem Grund größer ist als die Eingangsspannung des anderen Umrichters wird letztere durch die Rückspeisung vergrößert. Da die Größe der Magnetisierungsenergie dem Quadrat der jeweiligen Eingangsspannung proportional ist, ist dieser Ausgleich sehr wirkungsvoll, d.h. der Umrichter mit der momentan höheren Eingangsspannung liefert entsprechend mehr Ladung an den Umrichter mit der momentan niedrigeren Eingangsspannung.

Falls die Unsymmetrie der beiden Eingangsteilspannungen U1 und U2 die Grenzen eines vorgegebenen Toleranzbereiches erreicht, tritt die in Fig. 2 dargestellte Schaltung in Aktion. Die am Ausgang der Operationsverstärker O1 und O2 auftretenden, den Eingangsteilspannungen U1 bzw. U2 proportionalen Meßspannungen werden in den Operationsverstärkern O3 und O4 voneinander subtrahiert. Die entsprechenden Differenzen verursachen eine Pulsbreitenmodulation mit Hilfe der Komparatoren C1 bzw. C2 in der Weise, daß die Einschaltphase des Lastschalters in demjenigen Umrichter verkürzt wird, dessen Eingangsteilspannung abgesunken ist. Der jeweils andere Umrichter wird nicht beeinflußt. Durch die Verkürzung der Einschaltphase wird aus dem betreffenden Eingangskondensator weniger Strom entnommen, so daß die Unsymmetrie zumindest teilweise aufgehoben wird.

Falls die Eingangsspannung eines der beiden Umrichter oder beider Umrichter unter eine Bezugsspannung sinkt, bewirken die Komparatoren C3 und/oder C4 eine Abschaltung des Gerätes.

In Fig. 1 ist eine durch die gestrichelt gezeichnete Verbindung zwischen den Anschlußklemmen 1 und 4 bzw. 2 und 3 angedeutete Umschaltmöglichkeit vorgesehen: Wenn diese Verbindungen wirksam und die Verbindung zwischen den Eingangsklemmen 3 und 4 unterbrochen ist, sind die Eingänge der beiden Umrichter UM1 und UM2 nicht in Reihe sondern zueinander parallel geschaltet. Damit kann die Umrichteranordnung an einer entsprechend niedrigeren Netzspannung betrieben werden, wobei sie als Doppel-Durchflußumrichter wirkt.

Die Erfindung ist nicht auf das vorangehend beschriebene Ausführungsbeispiel beschränkt. So können beispielsweise auch mehr als zwei Umrichter mit ihren Eingängen in Reihe geschaltet werden, wobei durch entsprechende Überwachungseinrichtungen bewirkt wird, daß die Eingangsteilspannungen der einzelnen Umrichter die zulässigen Höchstwerte nicht überschreiten. Der entsprechende Spannungsausgleich kann unter Einbeziehung einer gegebenenfalls vorhandenen Regeleinrichtung zur Ausregelung von Ausgangsspannungsschwankungen erfolgen oder durch eine spezielle Regeleinrichtung. Die Eingangsteilspannungen müssen nicht notwendigerweise gleich sein sondern können nach Maßgabe der Belastbarkeit der verwendeten Schaltelemente voneinander abweichen.

Obwohl die Erfindung vorzugsweise für Umrichteranordnungen großer Leistung verwendbar ist und für solche in erster Linie Durchflußumrichter in Betracht kommen, ist die Erfindung nicht hierauf beschränkt. Sie läßt sich auch bei anderen Umrichterarten, z.B. Sperrumrichtern, mit Vorteil anwenden, wenn diese an einer Eingangsspannung betrieben werden sollen, die größer ist als die Spannungsbelastbarkeit der verwendeten Halbleiterbauelemente oder wenn die Eingangsspannung zwar nicht größer ist als die Spannungsbelastbarkeit verfügbarer Bauelemente, aus Kostengründen jedoch Bauelemente mit vergleichsweise geringerer Belastbarkeit Verwendung finden sollen.

Die Beeinflussung der Übertragungsfaktoren der verwendeten Umrichter zum Zwecke der Ausregelung von Abweichungen der einzelnen Eingangsteilspannungen muß nicht notwendigerweise durch Pulsbreitenmodulation erfolgen. Auch andere Beeinflussungsarten sind denkbar. Es ist auch nicht erforderlich, daß die bei Durchflußumrichtern mögliche kreuzweise magnetische Rückspeisung mit einer elektronischen Regelung der Eingangsteilspannung kombiniert wird, wie dies beim oben beschriebenen Ausführungsbeispiel der Fall war. Beide Regelungsarten können vielmehr auch einzeln angewendet werden.

**Patentansprüche**

1. Schaltungsanordnung für Umrichter mit einer Regeleinrichtung zur Ausregelung von Eingangs- und/oder Ausgangsspannungsabweichungen durch Beeinflussung der Übertragungscharakteristik des Umrichters, z.B. durch Änderung des Impuls-Pausenverhältnisses (Tastgrad) eines in einem Längszweig des Umrichters angeordneten vorzugsweise elektronischen Lastschalters, wobei wenigstens zwei Umrichter (UM1, UM2) vorgesehen sind, die ausgangsseitig auf eine gemeinsame Last arbeiten und eingangsseitig in Reihe geschaltet sind, dadurch gekennzeichnet, daß die genannte Regeleinrichtung (RE-ST) und/oder eine weitere Regeleinrichtung wenigstens eines der Umrichter (UM1, UM2) in Abhängigkeit von den an den Eingängen der einzelnen Umrichter liegenden Teilspannungen (U1, U2) der speisenden Eingangsgleichspannung (UE) derart steuerbar sind, daß relative Abweichungen dieser Teilspannungen ausgeregelt werden, wenn sie einen vorgegebenen Betrag überschreiten.

2. Schaltungsanordnung nach Anspruch 1, dadurch gekennzeichnet, daß die in den einzelnen Umrichtern (UM1, UM2) vorgesehenen Lastschalter (T1, T2) mit konstanter Pulsfrequenz (fo) betrieben und nach Maßgabe der Ausgangsspannung (UA) pulsbreitenmoduliert werden und daß die Einrichtungen (ST) zur Pulsbreitenmodulation ferner unter dem Steuereinfluß einer gemeinsamen Vergleichseinrichtung (V, Fig. 2) stehen, mittels derer die Impulsbreite eines Umrichters (UM1 oder UM2) nach Maßgabe von Abweichungen der relativen Eingangsteilspannung dieses Umrichters (U1 bzw. U2) veränderbar ist.

3. Schaltungsanordnung nach Anspruch 2, dadurch gekennzeichnet, daß die genannte Vergleichseinrichtung (V) eine Verringerung des Impuls-Pausenverhältnisses für den Lastschalter (z.B. T1) desjenigen Umrichters (z.B. UM1) herbeiführt, dessen Eingangsteilspannung (U1) einen vorgegebenen relativen Grenzwert unterschreitet.

4. Schaltungsanordnung nach Anspruch 2 oder 3, dadurch gekennzeichnet, daß die genannte Vergleichseinrichtung (V) eine Vergrößerung des Impuls-Pausenverhältnisses des Lastschalters desjenigen Umrichters herbeiführt, dessen Eingangsteilspannung einen vorgegebenen relativen Grenzwert überschreitet.

5. Schaltungsanordnung nach einem der vorhergehenden Ansprüche, dadurch gekennzeichnet, daß die Umrichter (UM1, UM2) Durchflußumrichter sind, deren Ausgänge parallel geschaltet und deren mit konstanter und gleicher Pulsfrequenz (fo) betriebenen Lastschalter (T1, T2) nach Art eines Doppeldurchflußumrichters in zeitlicher Aufeinanderfolge einschaltbar sind.

6. Schaltungsanordnung nach einem der vorhergehenden Ansprüche, dadurch gekennzeichnet, daß zwei Durchflußumrichter (UM1, UM2) vorgesehen sind, daß die genannte Vergleichseinrichtung (V) eine Meßschaltung (M) beinhaltet, in welcher aus der an den in Reihe geschalteten Umrichtereingängen anliegenden Summenspannung (UE = U1 + U2) und der an einem der Umrichtereingänge anliegenden Teilspannung (U1) durch Subtraktion die zweite Eingangsteilspannung (U2) ermittelt wird und die an ihren Ausgängen den Eingangsteilspannungen der beiden Umrichter proportionale Steuerspannungen liefert, daß diese Steuerspannungen jeweils zwei Komparatoren (C1, C2) zugeführt werden, welche die Pulsbreitenmodulatoren der beiden Umrichter in der Weise beaufschlagen, daß das Impulspausenverhältnis desjenigen Umrichters verringert wird, dessen Eingangsteilspannung kleiner ist als die des anderen Umrichters und/oder umgekehrt.

7. Schaltungsanordnung nach einem der vorhergehenden Ansprüche, dadurch gekennzeichnet, daß eine Unterspannungsüberwachungseinrichtung (UW) vorgesehen ist, in welcher den Eingangsteilspannungen (U1, U2) der einzelnen Umrichter (UM1, UM2) proportionale Meßspannungen mit einer Referenzspannung (UR) verglichen werden und die eine Sperrung aller Umrichter herbeiführt, wenn die Eingangsteilspannung eines von ihnen einen vorgegebenen Mindestwert unterschreitet.

8. Schaltungsanordnung nach Anspruch 1, dadurch gekennzeichnet, daß die Umrichter Durchflußumrichter mit Trenntransformatoren (TV1, TV2) sind, daß diese Trenntransformatoren eine Entmagnetisierungswicklung (W1, W2) aufweisen, mittels derer die während der Schaltphase des zugehörigen Lastschalters (T1, T2) von dem Transformatorkern aufgenommene Magnetisierungsenergie während der Sperrphase des jeweiligen Lastschalters (T1 oder T2) zur Eingangsquelle (C1, C2) zurückführbar ist, und daß die Entmagnetisierungswicklungen der einzelnen Umrichter jeweils mit dem Eingang eines anderen Umrichters verbunden sind, derart daß die Magnetisierungsenergie eines Umrichters zu dem Eingang eines anderen Umrichters zurückgespeist wird.

9. Schaltungsanordnung nach einem der vorhergehenden Ansprüche, dadurch gekennzeichnet, daß eine Umschaltmöglichkeit vorgesehen ist, durch welche die Umrichter der Schaltungsanordnung mit ihren Eingängen parallel oder, bei Vorhandensein einer entsprechenden Vielzahl von Umrichtern, gruppenweise parallel an das speisende Netz anschaltbar sind.

**Claims**

1. Circuit arrangement for a converter having a control device for correcting input and/or output voltage deviations by influencing the transmission characteristic of the converter, e.g. by changing the mark-to-space ratio (duty factor) of a preferably electronic load transfer switch arranged in a series arm of the converter, at least two converters (UM1, UM2) being provided, which work on a common load on the output side and are connected in series on the input side, characterized in that the named control device (RE-ST) and/or a further control device of at least one of the converters (UM1, UM2) can be controlled as a function of the component voltages (U1, U2) of the supplying input direct voltage (UE), which component voltages lie at the inputs of the individual converters, in such a way that relative deviations of these component voltages are corrected, when they overshoot a pre-determined value.

2. Circuit arrangement according to Claim 1, characterized in that the load transfer switches (T1, T2) provided in the individual converters (UM1, UM2) are operated with a constant pulse repetition frequency (fo) and are pulse width modulated in conformity with the output voltage (UA), and in that, further, the devices (ST) for pulse width modulation are under the controlling influence of a common comparator unit (V, Figure 2), by means of which the pulse width of a converter (UM1 or UM2) is variable in conformity with deviations of the relative input component voltage of this converter (U1 or U2).

3. Circuit arrangement according to Claim 2, characterized in that the named comparator unit (V) causes a decrease in the mark-to-space ratio for the load transfer switch (e.g. T1) of that converter (e.g. UM1), the input component voltage (U1) of which undershoots a predetermined relative limit.

4. Circuit arrangement according to Claim 2 or 3, characterized in that the named comparator unit (V) causes an increase in the mark-to-space ratio of the load transfer switch of that converter, the input component voltage of which overshoots a pre-determined relative limit.

5. Circuit arrangement according to one of the preceding claims, characterized in that the converters (UM1, UM2) are through-flow converters, the outputs of which are connected in parallel and the load transfer switches (T1, T2) of which, which are operated with constant and equal pulse repetition frequency (fo) can be switched in in temporal sequence in the manner of a double through-flow converter.

6. Circuit arrangement according to one of the preceding claims, characterized in that two through-flow converters (UM1, UM2) are provided, in that the named comparator unit (V) contains a measuring circuit (M), in which the second input component voltage (U2) is determined by subtraction from the sum voltage (UE = U1 + U2) present at the series-connected converter inputs and the component voltage (U1) present at one of the converter inputs, and which delivers at its outputs control voltages proportional to the input component voltages of the two converters, and in that these control voltages are respectively fed to two comparators (C1, C2) which trigger the pulse width modulators of the two converters in such a way that the mark-to-space ratio of that converter is decreased, the input component voltage of which is lower than that of the other converter and/or vice versa.

7. Circuit arrangement according to one of the preceding claims, characterized in that an undervoltage monitoring device (UW) is provided, in which measuring voltages proportional to the input component voltages (U1, U2) of the individual converters (UM1, UM2) are compared with a reference voltage (UR), and which causes a blocking of all converters, when the input component voltage of one of them undershoots a pre-determined minimum value.

8. Circuit arrangement according to Claim 1, characterized in that the converters are through-flow converters with isolating transformers (TV1, TV2), in that these isolating transformers have a demagnetizing winding (W1, W2), by means of which the magnetization energy absorbed from the transformer core during the switching phase of the pertinent load transfer switch (T1, T2) can be lead back to the input source (C1, C2) during the blocking phase of the particular load transfer switch (T1, or T2), and in that the demagnetization windings of the individual converters are respectively connected to the input of another converter, in such a way that the magnetization energy of a converter is fed back to the input of another converter.

9. Circuit arrangement according to one of the preceding claims, characterized in that a throw-over option is provided, by means of which the converters of the circuit arrangement can be connected with the inputs in parallel, or given the accounts of a corresponding multiplicity of converters, in parallel in groups, to the supplying grid.

**Revendications**

1. Montage pour convertisseurs, comprenant un système régulateur pour compenser des écarts de la tension d'entrée et/ou de la tension de sortie par la variation de la caractéristique de transfert du convertisseur, par exemple par le changement du rapport impulsion-intervalle entre impulsions (rapport cyclique) d'un interrupteur de charge, de préférence électronique, disposé dans une branche longitudinale du convertisseur, le montage comportant au moins deux convertisseurs (UM1, UM2) qui alimentent une charge commune par leurs sorties et qui sont connectés en série par leurs entrées, caractérisé en ce que le système régulateur (RE-ST) mentionné et/ou un autre système régulateur d'au moins un des convertisseurs (UM1, UM2) peuvent être commandés, en fonction des tensions partielles (U1, U2) appliquées aux entrées des différents convertisseurs de la tension continue d'alimentation (UE), de manière que des écarts relatifs de ces tensions partielles soient compensés par la régulation lorsqu'ils dépassent une valeur préfixée.

2. Montage selon la revendication 1, caractérisé en ce que les interrupteurs de charge (T1, T2) prévus dans les différents convertisseurs (UM1, UM2) sont commandés à une fréquence d'impulsion (fo) constante et sont modulés en largeur d'impulsion en fonction de la tension de sortie (UA), et que, en outre, les dispositifs (ST) pour la modulation en largeur d'impulsion sont sous l'influence de la commande d'un dispositif de comparaison (V, Fig. 2) commun, au moyen duquel la largeur d'impulsion d'un convertisseur (UM1 ou UM2) est variable en fonction d'écarts de la tension partielle d'entrée relative de ce convertisseur (U1 ou U2).

3. Montage selon la revendication 2, caractérisé en ce que ledit dispositif de comparaison (V) produit une diminution du rapport impulsion-intervalle entre impulsions pour l'interrupteur de charge (par exemple T1) du convertisseur (par exemple UM1) dont la tension partielle d'entrée (U1) descend au-dessous d'une valeur limite relative qui a été fixée d'avance.

4. Montage selon la revendication 2 ou 3, caractérisé en ce que ledit dispositif de comparaison (V) produit une augmentation du rapport impulsion-intervalle entre impulsions de l'interrupteur de charge du convertisseur dont la tension partielle dépasse une valeur limite relative qui a été fixée d'avance.

5. Montage selon une des revendications précédentes, caractérisé en ce que les convertisseurs (UM1, UM2) sont des convertisseurs à phase passante dont les sorties sont branchées en parallèle et dont les interrupteurs de charge (T1, T2), commandés à une fréquence d'impulsion (fo) constante et identiques, peuvent être enclenchés l'un après l'autre à la façon d'un double convertisseur à phase passante.

6. Montage selon une des revendications précédentes, caractérisé en ce qu'il comprend deux convertisseurs à phase passante (UM1, UM2), que ledit dispositif de comparaison (V) comporte un circuit de mesure (M) dans lequel est déterminée la seconde tension partielle d'entrée par soustraction de la tension partielle (U1) appliquée à l'une des entrées des convertisseurs de la tension somme (UE = U1 + U2) des entrées branchées en série des convertisseurs, ce circuit de mesure (M) délivrant sur ses sorties des tensions de commande proportionnelles aux tensions partielles d'entrée des deux convertisseurs, que ces tensions de commande sont appliquées à deux comparateurs (C1, C2) qui agissent sur les modulateurs en largeur d'impulsion des deux convertisseurs, de manière que soit diminué, le rapport impulsion-intervalle entre impulsions du convertisseur dont la tension partielle d'entrée est inférieure à celle de l'autre convertisseur et/ou inversement.

7. Montage selon une des revendications précédentes, caractérisé en ce qu'il comprend un dispositif de surveillance de minimum de tension (UW) dans lequel des tensions de mesure proportionnelles aux tensions partielles d'entrée (U1, U2) des différents comparateurs (UM1, UM2), sont comparées avec une tension de référence (UR) et qui provoque le blocage de tous les convertisseurs si la tension partielle d'entrée de l'un d'eux descend au-dessous d'une valeur minimale préfixée.

8. Montage selon la revendication 1, caractérisé en ce que les convertisseurs sont des convertisseurs à phase passante comportant des transformateurs d'isolement (Tr1, Tr2), que ces transformateurs d'isolement présentent un enroulement de démagnétisation (W1, W2) au moyen duquel l'énergie de magnétisation absorbée par le noyau du transformateur, pendant la phase d'enclenchement de l'interrupteur de charge (T1, T2) correspondant, peut être renvoyée à la source d'entrée (C1, C2) au cours de la phase de blocage de l'interrupteur de charge (T1 ou T2) concerné, et que les enroulements de démagnétisation des différents convertisseurs sont connectés chacun à l'entrée d'un autre convertisseur, de telle sorte que l'énergie de magnétisation d'un convertisseur est rétroinjectée dans l'entrée d'un autre convertisseur.

9. Montage selon une des revendications précédentes, caractérisé en ce qu'il comporte une variante de branchement au moyen de laquelle les convertisseurs du montage peuvent être raccordés en parallèle au réseau d'alimentation par leurs entrées ou, en présence d'un nombre relativement grand de convertisseurs, peuvent être raccordés en parallèle par groupes au réseau d'alimentation par leurs entrées.

## FIG 1

## FIG 2